# EUROPEAN PATENT APPLICATION

(11) **EP 2 568 194 A1**
(43) Date of publication of application: **13.03.2013**
(21) Application number: 11180611.3
(22) Date of filing: 08.09.2011
(51) Int. Cl.: F16F 15/32

(54) **An apparatus comprising a shaft and a balancing device**

(71) Applicant: Siemens Aktiengesellschaft, 80333 München (DE)
(72) Inventor: Knowles, Grahame, Lincoln, LN6 3LN (GB)
(74) Representative: McGowan, Nigel George

(57) **Abstract**

An apparatus comprising a shaft (2 or 12 or 22 or 42) mounted for rotation and a balancing device (1, 3a, 3b, 4 or 11a, 11b, 13, 14 or 21a, 21b, 26, 27 or 41, 44, 45) mounted for rotation with the shaft for balancing the shaft to reduce deflection of the shaft due to rotation of the shaft, the balancing device balancing the shaft by moving in the opposite sense to deflection of the shaft on rotation of the shaft, characterised in that the balancing device is adjustable to vary the amount of balancing applied to the shaft by the balancing device.

## Description

This invention relates to an apparatus comprising a shaft and a balancing device.

More particularly the invention relates to an apparatus comprising a shaft mounted for rotation and a balancing device mounted for rotation with the shaft for balancing the shaft to reduce deflection of the shaft due to rotation of the shaft, the balancing device balancing the shaft by moving in the opposite sense to deflection of the shaft on rotation of the shaft.

EP 2 226 529 A1 discloses such an apparatus. EP 2 226 529 A1 relates to balancing sleeve designs which are secured to one end of the shaft and require the lengthwise stiffness of the sleeve to be matched to that of the shaft in order to balance the shaft at higher speeds of rotation of the shaft where there is deflection of the shaft. Such balancing of the shaft reduces the lateral loading (loading in a direction transverse to the shaft) imposed on the shaft support bearings. In EP 2 226 529 A1, a balance weight is given the flexibility to counter the deflection of the shaft so as to maintain, as shaft speed increases, equilibrium between the balance weight centrifugal force and the centrifugal force of the shaft.

In EP 2 226 529 A1, no consideration is given to the forces applied to the shaft, only to reduction in balancing error (which then results in a reduction in the lateral load on the support bearings). Indeed, following EP 2 226 529 A1, the shaft deflection would still reach unsatisfactorily high levels at operation close to the shaft's critical speed, but would be accompanied by similar, counter acting deflections, by the balancing sleeve. The bearing load/orbit deflection could therefore provide a false indication of safe operating conditions.

According to the present invention there is provided an apparatus comprising a shaft mounted for rotation and a balancing device mounted for rotation with the shaft for balancing the shaft to reduce deflection of the shaft due to rotation of the shaft, the balancing device balancing the shaft by moving in the opposite sense to deflection of the shaft on rotation of the shaft, characterised in that the balancing device is adjustable to vary the amount of balancing applied to the shaft by the balancing device.

The balancing device may be mountable on the shaft at different distances along the shaft, thereby to vary the amount of balancing applied to the shaft by the balancing device.

The balancing device may be mountable on the shaft at a sole distance along the shaft, the balancing device including a plurality of locations at different distances along the shaft configured for the fitment of a trim balance weight, thereby to vary the amount of balancing applied to the shaft by the balancing device.

In an apparatus according to the previous paragraph but one, it is preferable that the balancing device comprises a balancing ring disposed around the shaft concentric with the shaft, and a resilient mechanism by which the balancing ring is mounted on the shaft, the balancing ring including at least one location configured for the fitment of a trim balance weight.

In an apparatus according to the previous paragraph, it is preferable that the resilient mechanism comprises leaf springs disposed on opposite sides of the shaft and extending radially from the shaft, one end of the leaf springs being secured to the shaft, the other end of the leaf springs being secured to the balancing ring, and the location(s) configured for the fitment of a trim balance weight is/are disposed circumferentially around the shaft substantially midway between the leaf springs.

In an apparatus according to the previous paragraph, it is preferable that the balancing ring includes first and second pluralities of locations configured for the fitment of a trim balance weight, the first and second pluralities being disposed on opposite sides of the shaft, each of the first and second pluralities extending circumferentially around the shaft.

In an apparatus according to either of the previous two paragraphs, it is preferable that the balancing ring comprises first and second half rings, and the other ends of the leaf springs are secured to the balancing ring by being clamped between opposing faces of the first and second half rings.

In an apparatus according to the previous paragraph, it is preferable that the other ends of the leaf springs are clamped between opposing faces of the first and second half rings by way of clamp plates disposed between respective sides of the leaf springs and respective opposing faces of the first and second half rings.

In an apparatus according to any one of the previous four paragraphs, it is preferable that the one ends of the leaf springs are secured to the shaft by means of a ring clamp around the shaft, the ring clamp comprising first and second ring clamp halves, the one ends of the leaf springs being integral with respective ring clamp halves.

In an apparatus according to the previous paragraph but five, it is preferable that the resilient mechanism comprises an elastomeric material or a three dimensional metallic spring mesh disposed between the balancing ring and the shaft.

In an apparatus according to the previous paragraph, it is preferable that the balancing ring comprises first and second half rings, a ring clamp around the shaft is disposed between the elastomeric material or three dimensional metallic spring mesh and the shaft, the ring clamp comprising first and second ring clamp halves, the first half ring and the first ring clamp half have corresponding circumferential positions around the shaft, and the second half ring and the second ring clamp half have corresponding circumferential positions around the shaft.

In an apparatus according to the previous paragraph, it is preferable that the balancing ring includes first and second pluralities of locations configured for the fitment of a trim balance weight, the first and second pluralities being disposed on opposite sides of the shaft circumferentially around the shaft substantially midway between the meeting of the first and second half rings and the meeting of the first and second ring clamp halves, each of the first and second pluralities extending circumferentially around the shaft.

In an apparatus according to the previous paragraph but ten, it is preferable that the balancing device comprises first and second leaf springs mounted on the shaft on opposite sides of the shaft, the first and second leaf springs extending along the shaft, one or both of the first and second leaf springs including a location configured for the fitment of a trim balance weight.

In an apparatus according to the previous paragraph, it is preferable that the first and second leaf springs are mounted on the shaft by means of a ring clamp around the shaft, the ring clamp being located at one end of the first and second leaf springs, the other ends of the first and second leaf springs including a location configured for the fitment of a trim balance weight.

In an apparatus according to the previous paragraph but eleven, it is preferable that the balancing device comprises first and second leaf springs disposed on opposite sides of the shaft and extending along the shaft, one or both of the first and second leaf springs including a plurality of locations at different distances along the shaft configured for the fitment of a trim balance weight.

In an apparatus according to the previous paragraph, it is preferable that one or both of the first and second leaf springs include(s) an array of rows and columns of locations configured for the fitment of a trim balance weight, the rows extending along the shaft, the columns obliquely traversing the shaft.

In an apparatus according to either of the previous two paragraphs, it is preferable that the balancing device is mountable on the shaft at different circumferential positions around the shaft.

In an apparatus according to any one of the previous three paragraphs, it is preferable that the first and second leaf springs are mounted on the shaft by means of a pair of parallel adjacent bolts which traverse the shaft passing through the centre of the shaft, a first pair of adjacent ends of the bolts passing through the first leaf spring and a first pair of nuts being threaded onto the first pair of adjacent ends, a second pair of adjacent ends of the bolts passing through the second leaf spring and a second pair of nuts being threaded onto the second pair of adjacent ends.

In an apparatus according to any one of the previous three paragraphs but one, it is preferable that the first and second leaf springs are mounted on the shaft by means of a mounting ring around the shaft and fasteners for fastening the first and second leaf springs to the mounting ring.

In an apparatus according to the previous paragraph, it is preferable that the mounting ring comprises an end flange of the shaft.

The invention will now be described, by way of example, with reference to the accompanying drawings, in which:
Fig 1(a) illustrates a first apparatus in accordance with the present invention;
Fig 1(b) is a cross section on the line A-A in Fig 1(a);
Fig 1 (c) illustrates the application of a balancing centrifugal force part way along a rotating shaft;
Fig 2 (a) illustrates a second apparatus in accordance with the present invention;
Fig 2 (b) is a cross section on the line A-A in Fig 2 (a);
Fig 2 (c) illustrates the fitting of a trim balance weight in the second apparatus of Fig 2 (a);
Figs 3 (a) and 3 (b) illustrate a third apparatus in accordance with the present invention, Fig 3(a) being a cross section on the line A-A in Fig 3(b), and Fig 3(b) being a cross section on the line B-B in Fig 3 (a);
Fig 3 (c) is a view on the arrow 'X' in Fig 3 (b); and
Fig 4 illustrates a fourth apparatus in accordance with the present invention.

Further theoretical analysis of the approach of EP 2 226 529 A1 has revealed the importance and advantage to be gained from the balancing moment applied to the shaft by the balancing sleeve (this balancing moment equals the balance weight centrifugal force times the sleeve length). It has been realised that it is possible, by optimising the various parameters that make up this balancing moment, to reduce not only the lateral loading on the support bearings, but also to nullify completely the effect of the first critical speed of the shaft, i.e. to reduce the shaft deflection to a negligible amount, thereby allowing operation right up to and beyond the first critical speed. It is to be noted in this regard that in most practical cases this requires a compensating balance moment to be applied at each end of the shaft. Thus, the possibility exists to increase the operating speed range and performance flexibility of any drive train of which the shaft is a part.

However, due to manufacturing difficulties, shaft imbalance can be very complex, with variations in both magnitude and phase along the length of the shaft. The requirements to completely compensate for these imbalances would therefore require a high degree of measurement and analytical analysis making exact prediction most unlikely. The need therefore exists for a balancing system that allows precise, easy adjustment of the parameters that determine the balancing moment, so that final settings can then be made at the site commissioning stage, under actual working conditions.

Four apparatus incorporating this desired moment adjustment will now be described. Minimisation of the so called half weight of the shaft will also be considered.

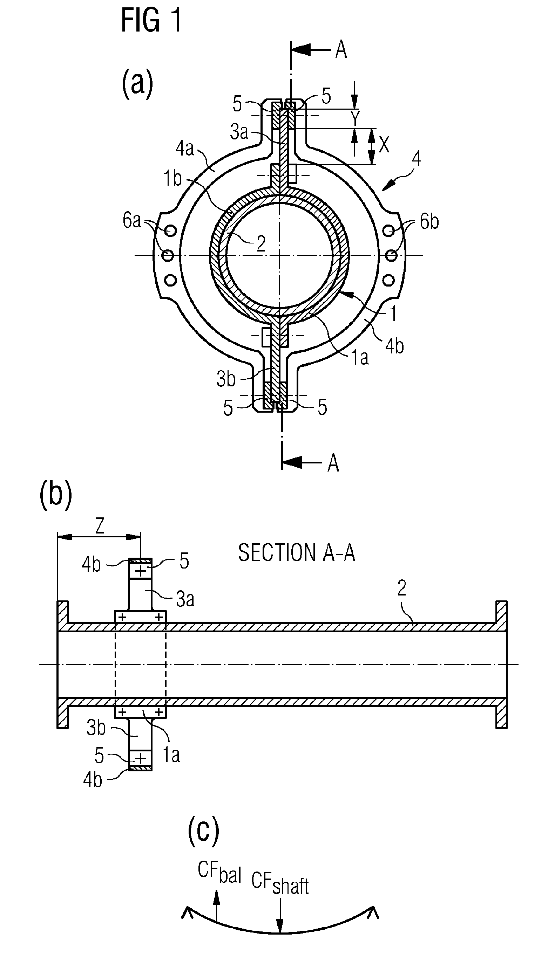

The balancing principle of EP 2 226 529 A1 is to apply a trim balance weight to the free end of a radial spring, which is firmly affixed to an end flange of the shaft. However, by applying this arrangement part way along the shaft, with say the trim balance weight centrifugal force acting upwards and the shaft imbalance centrifugal force acting downwards, as in Fig 1 (c), then a balancing moment is applied to the shaft which tends to prevent the shaft from deflecting downwards.

The apparatus of Figs 1(a) and 1(b) has a ring clamp 1 concentric with a shaft 2. Shaft 2 is in the form of a spacer tube of a flexible coupling. Ring clamp 1 comprises first and second ring clamp halves 1a, 1b, each half 1a, 1b having an integral, radially extending leaf spring 3a, 3b. Ring clamp 1 allows positive clamping onto shaft 2 so that both circumferential and axial positions with respect to the shaft can be set as required.

The apparatus further comprises a balancing ring 4 comprising first and second half rings 4a, 4b. The radially outer ends of leaf springs 3a, 3b are firmly clamped between opposing faces of first and second half rings 4a, 4b. This clamping is by way of clamp plates 5 of length 'Y'. Balancing ring 4 has a number of tapped holes 6a, 6b, as shown, for the fitment of trim balance weights, such that the centrifugal force of the trim balance weights can cause deflection of leaf springs 3a, 3b in the direction of the centrifugal force, e.g. to the left in Fig 1(a) if the weights are fitted in the left hand side holes 6a.

Prior to commencing shaft balance there is axi-symmetry so that shaft balance commences from a zero balance condition. To balance shaft 2, a set of trim balance holes 6a or 6b is chosen, and the circumferential position of the chosen set is adjusted so that it is 180 degrees out of phase with the residual shaft imbalance. Very precise, independent adjustments can then be made to the following balancing moment parameters: (i) the size of the trim balance weights can be adjusted, (ii) the arm 'Z' of the balancing moment can be adjusted by varying the axial position, and (iii) the stiffness of leaf springs 3a, 3b can be adjusted by varying the leaf spring length `X' by fitting clamp plates 5 of different length 'Y' . Circumferential and axial graduation marks can be scribed on the shaft to aid adjustment.

The function of leaf springs 3a, 3b is to allow the trim balance weight to move away from shaft 2, as shaft speed increases, in the direction of the trim balance weight centrifugal force. This function could alternatively be achieved by removing the leaf springs and filling (or partially filling) the annular space between ring clamp 1 and balancing ring 4 with an elastomeric material, or a three dimensional metallic spring mesh. Bonding or similar would then be used to secure the first and second ring clamp halves 1a, 1b comprising ring clamp 1 to the corresponding first and second half rings 4a, 4b comprising balancing ring 4.

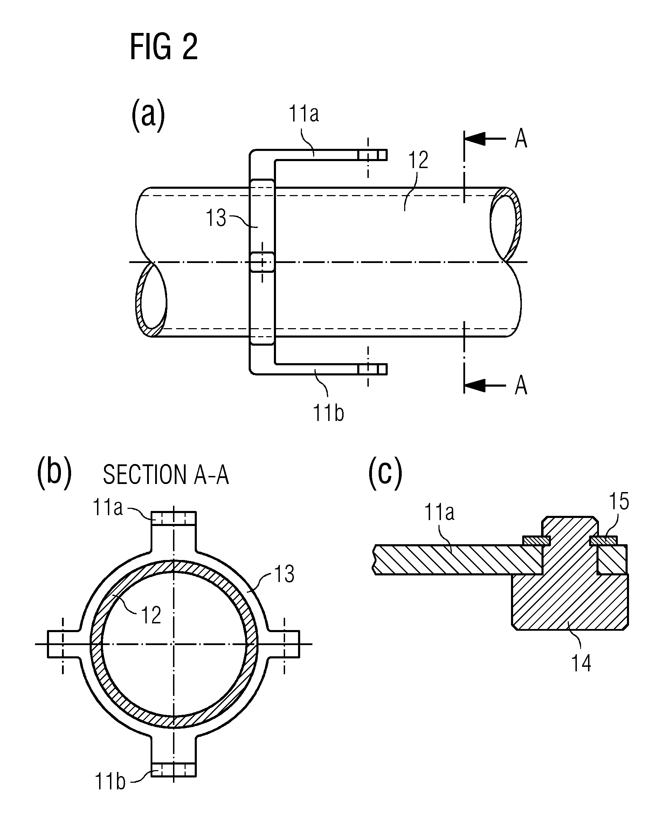

The apparatus of Figs 2(a) to 2(c) also allows circumferential and axial adjustment. The apparatus comprises two diametrically opposed, axially extending leaf springs 11a, 11b mounted on a shaft 12 by means of a ring clamp 13. Various size trim balance weights 14 can be fitted to each leaf spring 11a, 11b, and held in place by a circlip 15. Instead of a circlip, a spring ring or screw etc could be used.

The apparatus of Figs 2(a) to 2(c) is of neater construction than that of Figs 1(a) and 1(b). It has a lower half weight, and is also torsionally much stiffer (the apparatus of Figs 1(a) and 1(b) could cause problems in a drive train which is subjected to high torsional accelerations/oscillations).

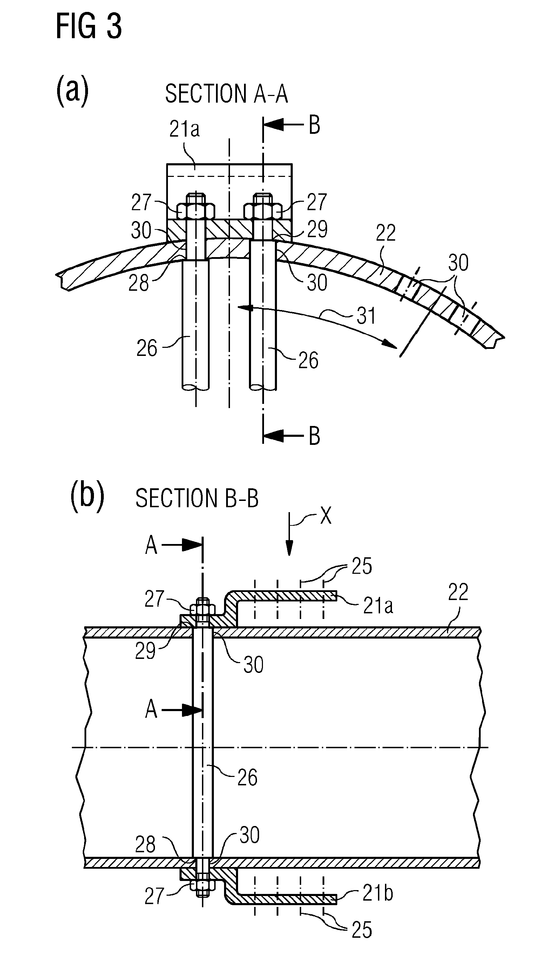

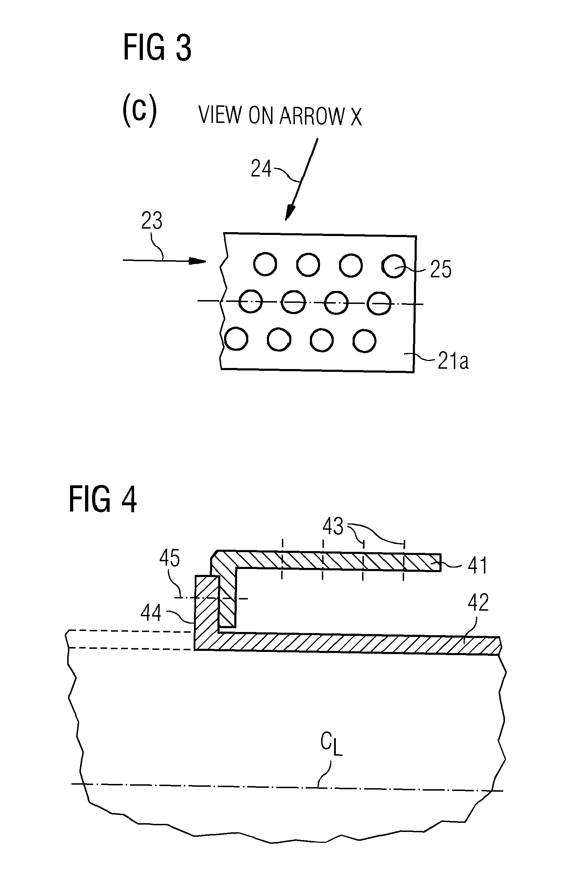

The apparatus of Figs 3(a) to 3(c) comprises first and second axially extending leaf springs 21a, 21b disposed on opposite sides of a shaft 22. Each of leaf springs 21a, 21b includes an array of rows 23 and columns 24 of trim balance holes 25. Rows 23 extend along shaft 22, columns 24 obliquely traverse the shaft. Leaf springs 21a, 21b are mounted on shaft 22 by means of a pair of parallel adjacent bolts 26 and nuts 27. The bolts traverse the shaft passing through the centre of the shaft.

Bolts 26 include first and second shoulders 28, 29, which prevent both squashing of shaft 22 due to over tightening of nuts 27, and also `ovalling' of the shaft due to the trim balance weight centrifugal force, as this force is reacted against bolts 26 as opposed to shaft 22 thereby maintaining circularity of the shaft. This is important at high speed, as balance and lateral stiffness could otherwise be affected.

Pairs of equally spaced holes 30 are machined at suitable intervals 31 around the circumference of shaft 22, to enable mounting of leaf springs 21a, 21b on shaft 22 at different circumferential positions around the shaft.

Although the manner of mounting leaf springs 21a, 21b axially fixes them, the leaf springs can be strategically positioned along the shaft, which can be highly beneficial in some drive train arrangements with localised imbalance moments.

The array of trim balance holes 25 of each leaf spring 21a, 21b extends along the leaf spring and has columns 24 which are skew with respect to a direction perpendicular to the axis of shaft 22. This provides a linked facility of precise stiffness and balancing moment adjustment, by simply varying the position of the trim balance weight along the leaf spring. The further the weight is positioned along the leaf spring, the lower the spring stiffness and also the greater the balancing moment applied to the shaft, and vice versa.

As in the case of the apparatus of Figs 2(a) to 2(c), the apparatus of Figs 3(a) to 3(c) is torsionally stiffer and has a lower half weight than the apparatus of Figs 1 (a) and 1 (b).

The apparatus of Fig 4 works on the same principle as that of Figs 3(a) to 3(c). It comprises first and second leaf springs 41 disposed on opposite sides of a shaft 42 and extending along the shaft (note, only one leaf spring 41 is shown in Fig 4). Each of leaf springs 41 includes an array of rows and columns of trim balance holes 43, as the array of trim balance holes 25 of the apparatus of Figs 3(a) to 3(c). First and second leaf springs 41 are mounted on shaft 42 by means of a mounting ring 44 around the shaft. First and second pairs of laterally spaced bolt fasteners 45 respectively fasten first and second leaf springs 41 to mounting ring 44 (note, only one fastener 45 of one pair is shown in Fig 4). Holes for pairs of bolt fasteners 45 are provided at suitable intervals around the circumference of mounting ring 44, to enable first and second leaf springs 41 to be mounted on shaft 42 at different circumferential positions around the shaft. Mounting ring 44 can be positioned part way along the shaft or can be an end flange of the shaft.

Although in the apparatus described above the shaft is in the form of a spacer tube of a flexible coupling, it will be apparent that the present invention could beneficially be applied to any drive train shaft which is subject to lateral deflection.

## Claims

1. An apparatus comprising a shaft (2 or 12 or 22 or 42) mounted for rotation and a balancing device (1, 3a, 3b, 4 or 11a, 11b, 13, 14 or 21a, 21b, 26, 27 or 41, 44, 45) mounted for rotation with the shaft for balancing the shaft to reduce deflection of the shaft due to rotation of the shaft, the balancing device balancing the shaft by moving in the opposite sense to deflection of the shaft on rotation of the shaft, **characterised in that** the balancing device is adjustable to vary the amount of balancing applied to the shaft by the balancing device.

2. An apparatus according to claim 1 wherein the balancing device (1, 3a, 3b, 4 or 11a, 11b, 13, 14) is mountable on the shaft (2 or 12) at different distances along the shaft, thereby to vary the amount of balancing applied to the shaft by the balancing device.

3. An apparatus according to claim 1 wherein the balancing device (21a, 21b, 26, 27 or 41, 44, 45) is mountable on the shaft (22 or 42) at a sole distance along the shaft, the balancing device including a plurality of locations (25 or 43) at different distances along the shaft configured for the fitment of a trim balance weight, thereby to vary the amount of balancing applied to the shaft by the balancing device.

4. An apparatus according to claim 2 wherein the balancing device (1, 3a, 3b, 4) comprises a balancing ring (4) disposed around the shaft (2) concentric with the shaft, and a resilient mechanism (3a, 3b) by which the balancing ring is mounted on the shaft, the balancing ring including at least one location (6a, 6b) configured for the fitment of a trim balance weight.

5. An apparatus according to claim 4 wherein the resilient mechanism (3a, 3b) comprises leaf springs (3a, 3b) disposed on opposite sides of the shaft (2) and extending radially from the shaft, one end of the leaf springs being secured to the shaft, the other end of the leaf springs being secured to the balancing ring (4), and the location(s) (6a, 6b) configured for the fitment of a trim balance weight is/are disposed circumferentially around the shaft substantially midway between the leaf springs.

6. An apparatus according to claim 5 wherein the balancing ring (4) includes first and second pluralities of locations (6a, 6b) configured for the fitment of a trim balance weight, the first and second pluralities being disposed on opposite sides of the shaft (2), each of the first and second pluralities extending circumferentially around the shaft.

7. An apparatus according to claim 5 or claim 6 wherein the balancing ring (4) comprises first and second half rings (4a, 4b), and the other ends of the leaf springs (3a, 3b) are secured to the balancing ring by being clamped between opposing faces of the first and second half rings.

8. An apparatus according to claim 7 wherein the other ends of the leaf springs (3a, 3b) are clamped between opposing faces of the first and second half rings (4a, 4b) by way of clamp plates (5) disposed between respective sides of the leaf springs and respective opposing faces of the first and second half rings.

9. An apparatus according to any one of claims 5 to 8 wherein the one ends of the leaf springs (3a, 3b) are secured to the shaft (2) by means of a ring clamp (1) around the shaft, the ring clamp comprising first and second ring clamp halves (1a, 1b), the one ends of the leaf springs being integral with respective ring clamp halves.

10. An apparatus according to claim 4 wherein the resilient mechanism comprises an elastomeric material or a three dimensional metallic spring mesh disposed between the balancing ring (4) and the shaft (2).

11. An apparatus according to claim 10 wherein the balancing ring (4) comprises first and second half rings (4a, 4b), a ring clamp (1) around the shaft (2) is disposed between the elastomeric material or three dimensional metallic spring mesh and the shaft, the ring clamp comprising first and second ring clamp halves (1a, 1b), the first half ring and the first ring clamp half have corresponding circumferential positions around the shaft, and the second half ring and the second ring clamp half have corresponding circumferential positions around the shaft.

12. An apparatus according to claim 11 wherein the balancing ring (4) includes first and second pluralities of locations (6a, 6b) configured for the fitment of a trim balance weight, the first and second pluralities being disposed on opposite sides of the shaft (2) circumferentially around the shaft substantially midway between the meeting of the first and second half rings (4a, 4b) and the meeting of the first and second ring clamp halves (1a, 1b), each of the first and second pluralities extending circumferentially around the shaft.

13. An apparatus according to claim 2 wherein the balancing device (11a, 11b, 13, 14) comprises first and second leaf springs (11a, 11b) mounted on the shaft (12) on opposite sides of the shaft, the first and second leaf springs extending along the shaft, one or both of the first and second leaf springs including a location configured for the fitment of a trim balance weight (14).

14. An apparatus according to claim 13 wherein the first and second leaf springs (11a, 11b) are mounted on the shaft (12) by means of a ring clamp (13) around the shaft, the ring clamp being located at one end of the first and second leaf springs, the other ends of the first and second leaf springs including a location configured for the fitment of a trim balance weight (14).

15. An apparatus according to claim 3 wherein the balancing device (21a, 21b, 26, 27 or 41, 44, 45) comprises first and second leaf springs (21a, 21b or 41) disposed on opposite sides of the shaft (22 or 42) and extending along the shaft, one or both of the first and second leaf springs including a plurality of locations (25 or 43) at different distances along the shaft configured for the fitment of a trim balance weight.

16. An apparatus according to claim 15 wherein one or both of the first and second leaf springs (21a, 21b or 41) include(s) an array of rows (23) and columns (24) of locations (25 or 43) configured for the fitment of a trim balance weight, the rows extending along the shaft (22 or 42), the columns obliquely traversing the shaft.

17. An apparatus according to claim 15 or claim 16 wherein the balancing device (21a, 21b, 26, 27 or 41, 44, 45) is mountable on the shaft (22 or 42) at different circumferential positions around the shaft.

18. An apparatus according to claim 15 or claim 16 or claim 17 wherein the first and second leaf springs (21a, 21b) are mounted on the shaft (22) by means of a pair of parallel adjacent bolts (26) which traverse the shaft passing through the centre of the shaft, a first pair of adjacent ends of the bolts passing through the first leaf spring and a first pair of nuts (27) being threaded onto the first pair of adjacent ends, a second pair of adjacent ends of the bolts passing through the second leaf spring and a second pair of nuts (27) being threaded onto the second pair of adjacent ends.

19. An apparatus according to claim 15 or claim 16 or claim 17 wherein the first and second leaf springs (41) are mounted on the shaft (42) by means of a mounting ring (44) around the shaft and fasteners (45) for fastening the first and second leaf springs to the mounting ring.

20. An apparatus according to claim 19 wherein the mounting ring (44) comprises an end flange (44) of the shaft (42).
